# EUROPÄISCHE PATENTSCHRIFT

(11) **EP 1 488 118 B1**
(45) Veröffentlichungstag und Bekanntmachung des Hinweises auf die Patenterteilung: **25.04.2007**
(21) Anmeldenummer: 03722228.8
(22) Anmeldetag: 20.03.2003
(51) Int. Cl.: F16C 11/06, F16J 3/04, F16J 15/52

(54) **DICHTUNGSBALG MIT SCHNAPPVERBINDUNG**
SEALING BELLOWS WITH SNAP-ON CONNECTION
SOUFFLET D'ETANCHEITE A ASSEMBLAGE PAR ENCLIQUETAGE

(30) Priorität: 28.03.2002 DE 10214349
(43) Veröffentlichungstag der Anmeldung: 22.12.2004
(73) Patentinhaber: ZF Lemförder Metallwaren AG, 49448 Lemförde (DE)
(72) Erfinder: BUDDE, Frank, 49401 Damme (DE); SCHÖNHOFF, Stefan, 49082 Osnabrück (DE)
(86) Internationale Anmeldenummer: PCT/DE2003/000927
(87) Internationale Veröffentlichungsnummer: WO 2003/083317

(56) Entgegenhaltungen:
- EP-A- 0 942 189
- DE-A- 3 439 972
- DE-A- 19 542 406
- DE-A- 19 727 494
- DE-A- 19 847 294

## Beschreibung

Die vorliegende Erfindung betrifft einen Dichtungsbalg gemäß dem Oberbegriff des Anspruch 1 sowie die Verwendung des erfindungsgemäßen Dichtungsbalgs für Kugelgelenke, insbesondere für Kraftfahrzeuge.

Im Bereich der Fahrwerkstechnik werden häufig Manschetten oder auch Gummibälge genannte Dichtungssysteme verwendet. Die befinden sich z.B. im Bereich von Kugelgelenken oder Antriebsachsen. Die Manschetten oder Gummibälge haben die Funktion einer Dichtung, die auch bei Drehbewegungen wie auch bei Kippbewegungen den inneren Funktionsbereich z.B. eines Kugelgelenks gegen äußere Einflüsse trennen. Hierdurch wird zusätzlicher Verschleiß, z.B. in Form von Reibung und Korrosion vermieden. Die Balgränder sind in der Regel mit zusätzlichen Spannringen versehen, die den Dichtungsbalg an die meist metallischen Bauteile, wie z.B. das Gehäuse eines Kugelgelenks oder einen Zapfen druckbeaufschlagen, so dass der Dichtungsbalg gegen Abrutschen in axialer Richtung gesichert ist. Meist weisen diese Dichtungsbälge bzw. Manschetten noch zusätzliche in radialer Richtung nach innen vorstehende Kragen auf, die hinter Vorsprünge an den Bauteilen greifen und somit eine zusätzliche axiale Fixierung zusätzlich zum Spannring realisieren. Aus der DE-OS-1 575 708, der DE-OS 1 168 717 sowie der DE-PS 925 328 sind derartige gattungsgemäße Dichtungsbälge für Kugelgelenke bekannt.

Dichtungsbälge mit den Merkmalen des Oberbegriffs des Anspruchs 1 sind aus den Dokumenten DE 195 42 406 A, DE 197 27 494 A, EP 0 942 189 A und DE 34 39 972 A bekannt.

Nachteilig bei den gattungsgemäßen Dichtungsbälgen bzw. Manschetten ist, dass für eine sichere axiale Fixierung des Dichtungsbalgs stets ein zusätzlicher Spannring benötigt wird, so dass nicht nur zusätzliche Teile benötigt werden, sondern hierdurch auch der Montageaufwand relativ hoch ist.

Aufgabe der vorliegenden Erfindung ist es, einen Dichtungsbalg bereitzustellen, der die vorbeschriebenen Nachteile vermeidet.

Diese Aufgabe wird erfindungsgemäß mit einem Dichtungsbalg gemäß den Merkmalen des Anspruchs 1 gelöst. Weitere vorteilhafte Ausgestaltungen des erfindungsgemäßen Dichtungsbalgs ergeben sich durch die Merkmale der Unteransprüche 2 bis 13. Die Erfindung umfasst ebenfalls die Verwendung des erfindungsgemäßen Dichtungsbalgs für Kugelgelenke.

Der erfindungsgemäße Dichtungsbalg weist den Vorteil auf, dass kein Spannring für die abdichtende und dauerhafte Befestigung des Balges an einem Bauteil benötigt wird. Der Dichtungsbalg lässt sich vorteilhaft leicht auf ein Bauteil mit seiner Verzahnung aufschieben, wobei die Zähne der Verzahnung durch ihre Form umgebogen werden und in der Montagestellung in entsprechende Ausnehmungen des Bauteils einschwenken. Vorteilhaft hat die Verzahnung die Form eines Sägezahns, so dass die Zähne der Verzahnung nur in eine Richtung umgebogen werden können. Ein ungewolltes Heruntergleiten des Dichtungsbalges von dem Bauteil ist dadurch nur durch aufbringen einer den Balg eventuell zerstörenden Kraft möglich.

Durch das Vorsehen von mehreren umlaufenden Zahnreihen wird eine sehr gute Dichtung zwischen dem Dichtungsbalg und dem Bauteil erzielt. Aufgrund des fehlenden Spannringes im Bereich der Verzahnung ergibt sich eine dynamische Verbindung, die vorteilhaft als Schnappverbindung ausgestaltet ist. Durch die vorteilhafte Ausgestaltung des Bauteils kann gewährleistet werden, dass sich der Dichtungsbalgrand, der die Verzahnung trägt nicht mehr in axialer Richtung z.B. Zapfenrichtung bewegen kann.

Es ist selbstverständlich möglich, dass jeder Dichtungsblagrand eine entsprechende Verzahnung aufweist, so dass für beide Seiten kein Spannring mehr benötigt wird. Es ist jedoch selbstverständlich auch möglich, dass ein Dichtungsbalgrand mittels eines Spannrings gegen ungewolltes lösen statisch gesichert ist. So kann dieser Dichtungsbalgrand Dichtungslippen aufweisen, die sich abdichtend durch die Krafteinwirkung des Spannrings an das Bauteil anlegen. Der Dichtungsbalgrand weist dazu vorteilhaft eine nach außen weisende umlaufende Nut zur Aufnahme des Dichtungsrings auf, so dass dieser nach der Montage nicht ungewollt vom Dichtungsbalg gleiten kann.

Als Material für die Verzahnung bzw. die Schnapphakenverbindung kommen generell alle Kunststoffe in Frage. Bevorzugt werden jedoch Thermoplaste, die gute tribologische und elastische Eigenschaften aufweisen.

Nachfolgend werden anhand von Zeichnungen mögliche Ausführungsformen von erfindungsgemäßen Dichtungsbälgen bzw. Kugelgelenken näher erläutert.

Es zeigen:
- Fig. 1:: Eine Querschnittsdarstellung durch ein mittels eines erfindungsgemäße Dichtungsblags geschützten Kugelgelenks;
- Fig. 2:: eine Ausschnittsvergrößerung von Fig. 1;
- Fig. 3:: eine weitere mögliche Ausführungsform mit optionalem Spannring;
- Fig. 4:: eine weitere mögliche Ausführungsform mit zusätzlichem Verzahnungselement, das an einem Bauteil, z.B. einem Kugelgelenkgehäuses, angeordnet ist;
- Fig. 5:: eine weitere mögliche Ausführungsform mit einvulkanisiertem bzw. umspritzen Ring aus Metall oder Kunststoff.

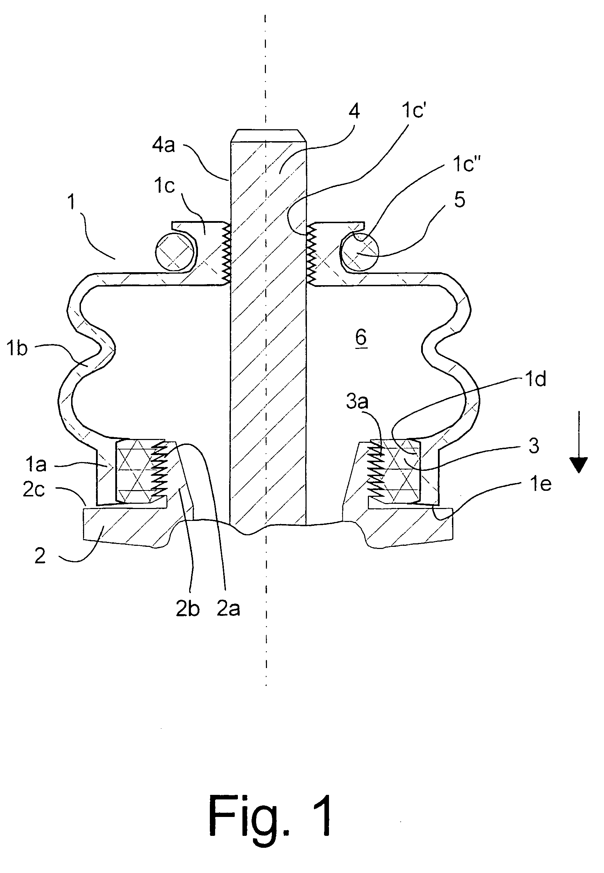

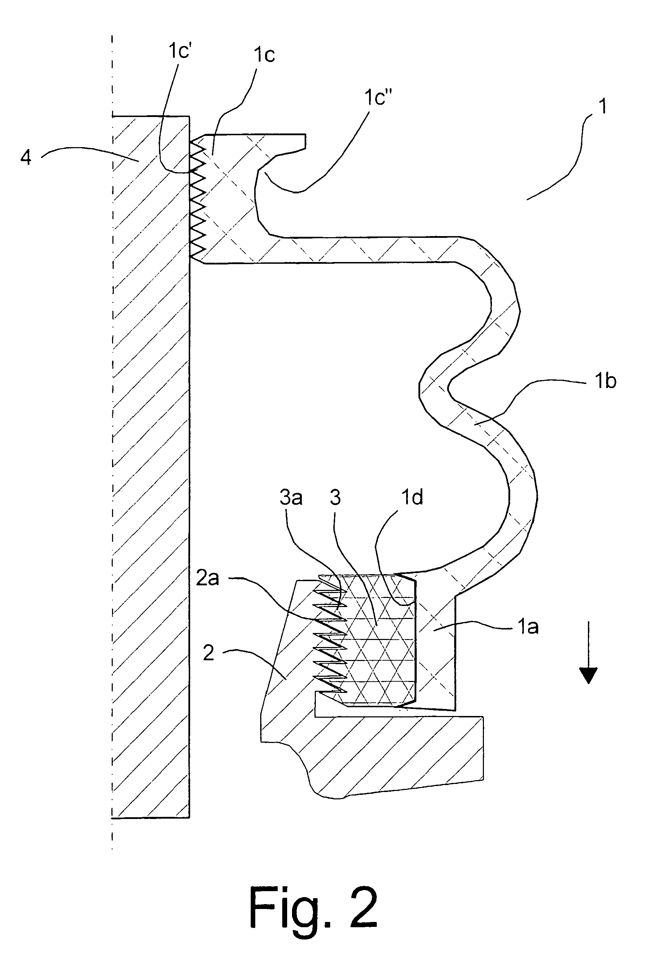

Die Fig. 1 und 2 zeigen den Ausschnitt eines Kugelgelenks, bestehend aus einem Gehäuse 2, dass eine nicht dargestellte Gelenkpfanne beherbergt. In der Gelenkpfanne des Gehäuses 2 liegt ein Kugelzapfen 4 mit seiner nicht dargestellten Gelenkkugel ein. Das Kugelgelenk ist von einem Dichtungsbalg 1 abdichtend eingeschlossen. Der Dichtungsraum 6 wird durch die Manschette bzw. den Mantel 1b umschlossen, wobei die beiden Dichtungsbalgränder 1a und 1c abdichtend an dem meist aus Metall bestehenden Gehäuse 2 bzw. dem Zapfen 4 anliegen. Die Dichtungsbalgränder 1a und 1 c sind an den Mantel 1b angeformt. Der Dichtungsbalgrand 1a weist eine zylindrische Innenfläche auf, an die ein Dichtungsring 3 angespritzt, angeklebt oder gehaftet ist. An seiner radial nach innen gewandten Seite hat der Dichtungsring 3 eine umlaufende Verzahnung 3a, die mit der ebenfalls umlaufenden Verzahnung 2a des Gehäuses 2 zusammenwirkt. Die Zähne der Verzahnung 3a des Dichtungsring 3 sind sägezahnförmig geformt, so dass sich der Dichtungsbalg 1 relativ problemlos in Pfeilrichtung über das Gehäuse 2 schieben lässt, jedoch nicht ungewollt von diesem wieder abrutschen kann. Die Verzahnung 2a des Gehäuses 2 ist an einem kragenförmigen Vorsprung 2b des Gehäuses angeordnet, wobei die Verzahnung 2a radial nach außen weist. Das Gehäuse 2 bildet mit der an den kragenförmigen Vorsprung 2b angrenzenden Wand 2c eine Begrenzung, die verhindert, dass die Verzahnung 3a im montierten Zustand ungewollt weiter in Pfeilrichtung verschoben wird. Dichtungsring 3 sowie Dichtungsbalgrand 1a sind aus einem elastischen Material, wodurch sich in radialer Richtung eine Vorspannung erzielen lässt, welche die Zähne der Verzahnungen fest ineinander greifen lässt. Durch die Sägezahnstruktur wirkt die Verzahnung wie eine Schnappverbindung. Der andere Dichtungsbalgrand 1c weist Dichtungslippen 1c' auf, die abdichtend an der Oberfläche 4a des Zapfens 4 anliegen. Ein Dichtungsring 5 liegt in einer entsprechend geformten umlaufenden Nut 1c" des Dichtungsbalgrandes 1c ein und erzeugt eine zentripetale Anpresskraft für die Dichtungslippen 1c', so dass sich eine sichere Abdichtung zwischen Zapfen 4 und Dichtungsbalg 1 gegen Feuchtigkeit und Schmutz ergibt. Der Mantel 1b des Dichtungsbalgs ist ebenfalls aus einem elastischen Material, so dass sich Zapfen 4 und Gehäuse 2 relativ zueinander bewegen können.

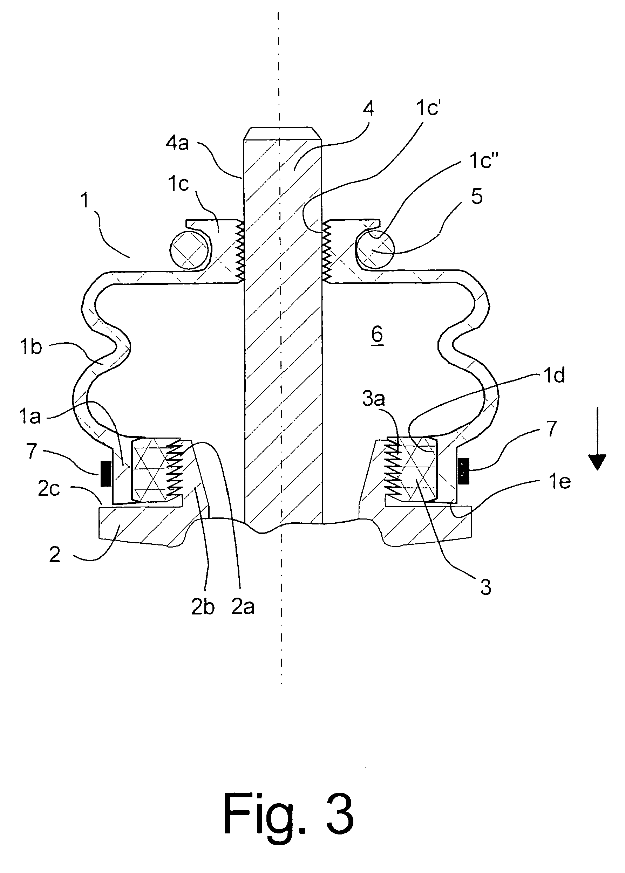

Die Fig. 3 zeigt einen optionalen Spannring 7, welcher eine zusätzliche Kraft in zentripetaler Richtung auf die abdichtende Verzahnung 3a, 2a aufbringt. Hierdurch wird eine stärkere Abdichtung erzielt, indem die Verzahnungen stärker ineinander greifen. Es ist selbstverständlich möglich, dass der Dichtungsbalgrand 1a an seiner radial nach außen weisenden Seite eine umlaufende Nut zur Aufnahme und Sicherung des Spannrings 7 in axialer Richtung aufweisen kann. Der zusätzliche Spannring 7 dient zur weiteren Verbesserung der Abdichtung und stellt keine Abkehr vom ursprünglichen Erfindungsgedanken dar.

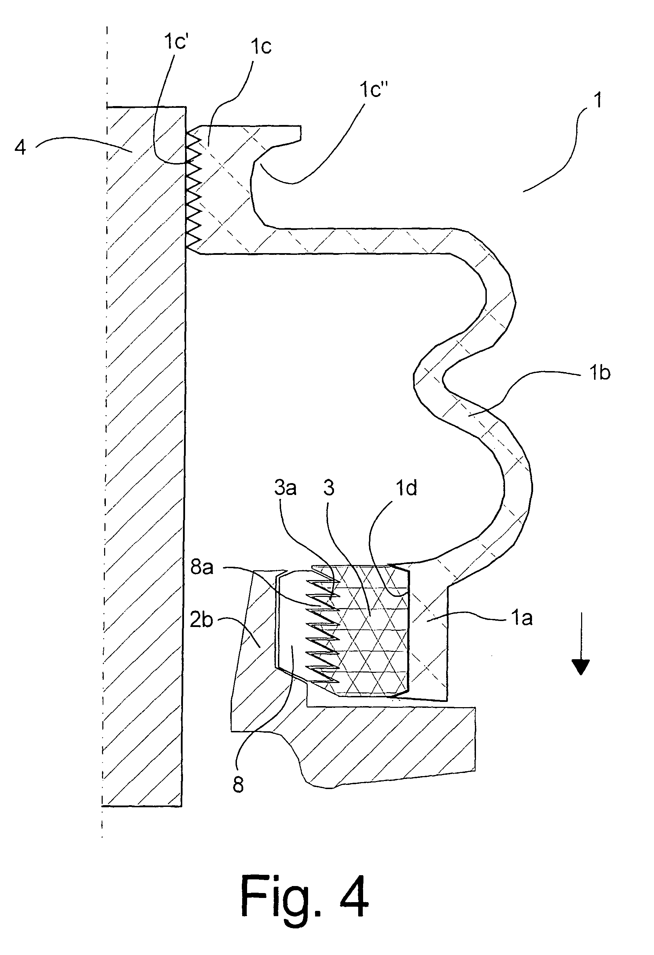

Die Fig. 4 zeigt eine weitere alternative Ausführungsform, bei der ein zusätzlicher Dichtungsring 8 an einem Vorsprung 2b des Gehäuses 2 angeordnet ist. Der Dichtungsring 8 liegt mit seiner radial nach innen weisenden Mantelfläche an dem Vorsprung 2b an. Der Vorsprung 2b kann eine umlaufende Nut bilden, in welcher der zusätzliche Dichtungsring 8 in axialer Richtung gesichert einliegen kann. Optional kann der Dichtungsring 8 mit dem Gehäuse 2 verklebt, verschweißt oder gehaftet werden. Es ist jedoch auch möglich, dass der Dichtungsring 8 aufgespritzt oder aufvulkanisiert wird. Der Dichtungsring 8 hat an seiner radial nach außen weisenden Seite eine umlaufende Verzahnung 8a, die mit der Verzahnung 3a des Dichtungsbalgs 1 zusammenwirkt. Der Dichtungsring 8 kann beispielsweise aus Metall, aus Gummi oder aus Kunststoff, insbesondere aus einem thermoplastischen Elastomer (TPE) gefertigt sein.

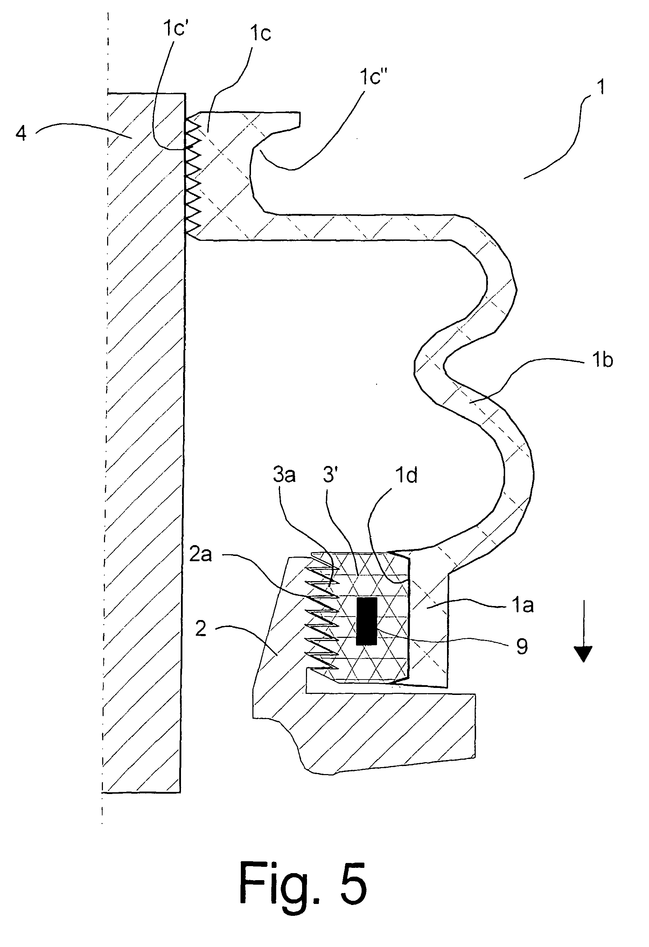

Die Fig. 5 zeigt eine weitere Ausformung der Ausführungsform gem. der Fig. 1 und 2, wobei der Dichtungsring 3' einen eingespritzten oder einvulkanisierten Ring 9 aufweist. Der Ring 9 kann z.B. zur Verstärkung ein Metallring sein.

Für alle vorbeschriebenen Ausführungsbeispiele gilt, dass die Verzahnung gefettet sein kann. Hierdurch wird vorteilhaft erreicht, dass sich der Dichtungsbalg 1 aufgrund der reduzierten Reibung leichter auf das Gehäuse 2 aufschieben lässt. Zusätzlich wird hierdurch eine bessere Dichtwirkung erzielt. Aufgrund der Verzahnung wirkt sich das Fett jedoch nicht negativ auf die Verrastung der Verzahnung im montierten Zustand aus.

Ebenfalls für alle vorbeschriebenen Ausführungsbeispiele gilt, dass bevorzugt die Verzahnung mit Hilfe des Materials Kunststoff realisiert ist, und dass der Dichtungsbalg aus Gummi gefertigt ist. Es ist selbstverständlich möglich andere Materialkombinationen zu wählen, sofern dies für den jeweiligen Einsatzzweck erforderlich ist.

### Bezugszeichenliste:

- 1: Dichtungsbalg
- 1a: Dichtungsbalgrand
- 1b: Mantel
- 1c: Dichtungsbalgrand
- 1c': Dichtungslippen
- 1c": Nut
- 1d: Innenfläche des Dichtungsbalgrands 1a
- 1e: Unterseite des Dichtungsbalgrands 1a
- 2: Gehäuse
- 2a: Verzahnung
- 2b: Vorsprung
- 2c: Wand
- 3: Dichtungsring
- 3a: Verzahnung
- 4: Kugelzapfen
- 4a: Oberfläche
- 5: Dichtungsring
- 6: Dichtungsraum
- 7: Spannring
- 8: Dichtungsring
- 8a: Verzahnung
- 9: Ring

## Patentansprüche

1. Dichtungsbalg, einen zwischen einem ersten und einem zweiten Dichtungsbalgrand (1a, 1c) angeordneten Mantel (1b) aufweisend, wobei die Dichtungsbalgränder (1a, 1c) im montierten Zustand des Dichtungsbalgs (1) abdichtend an Bauteilen anliegen und wobei mindestens ein erster Dichtungsbalgrand (1a) eine radial nach innen weisende umlaufende Verzahnung (3a) aufweist,
**dadurch gekennzeichnet,**
**dass** ein Dichtungsring (3) die Verzahnung (3a) bildet, wobei der Dichtungsring (3) an einen Dichtungsbalgrand (1a) oder direkt an den Mantel angespritzt, angehaftet oder angeklebt ist.

2. Dichtungsbalg nach Anspruch 1, **dadurch gekennzeichnet, dass** die Zähne der Verzahnung (3a) des Dichtungsbalges (1) in einer korrespondierenden Außenkontur (2a) eines Bauteils (2) im montierten Zustand abdichtend einliegen.

3. Dichtungsbalg nach Anspruch 1 oder 2, **dadurch gekennzeichnet, dass** die Verzahnung (3a) sägezahnförmig ist, wobei die schrägen Flanken in Richtung der Aufziehbewegung des Dichtungsbalges (1) auf das Bauteil (2) weisen.

4. Dichtungsbalg nach Anspruch 1, **dadurch gekennzeichnet, dass** der Dichtungsring (3) einen Ring (9) insbesondere aus Kunststoff oder Metall aufweist, der insbesondere in dem Dichtungsring einliegt.

5. Dichtungsbalg nach Anspruch 1, **dadurch gekennzeichnet, dass** der Dichtungsring (3) aus Gummi und der aus Metall oder Kunststoff gefertigte Ring (9) einvulkanisiert ist, oder daß der Dichtungsring (3) aus Kunststoff ist, wobei dann der aus Metall oder Kunststoff gefertigte Ring (9) eingespritzt ist.

6. Dichtungsbalg nach einem der vorhergehenden Ansprüche, **dadurch gekennzeichnet, dass** der die Verzahnung (3a) aufweisende Dichtungsbalgrand (1a) bzw. der Dichtungsring (3) einen kreisförmigen Querschnitt hat, wobei der Innendurchmesser des Dichtungsbalgrandes (1a) bzw. Dichtungsrings (3) derart bemessen ist, daß im aufgeschobenen montierten Zustand die Vorspannung des Dichtungsbalgmaterials bzw. des Dichtungsringmaterials die Zähne der Verzahnung (3a) in die korrespondierende Außenkontur (2a) des Bauteils (2) abdichtend drückt.

7. Dichtungsbalg nach einem der vorhergehenden Ansprüche, **dadurch gekennzeichnet, dass** beide Dichtungsbalgränder eine Verzahnung aufweisen, die mit entsprechenden Oberflächenkonturen der mit dem Dichtungsbalg zusammenwirkenden Bauteilen zusammenwirken.

8. Dichtungsbalg nach einem der vorhergehenden Ansprüche, **dadurch gekennzeichnet, dass** die Verzahnung (3a) zusammen mit der korrespondierenden Außenkontur (2a) des Bauteils (2) eine abdichtende Schnappverbindung bildet.

9. Dichtungsbalg nach einem der vorhergehenden Ansprüche, **dadurch gekennzeichnet, dass** die Verzahnung (3a) aus Kunststoff, Gummi oder TPE gefertigt ist.

10. Dichtungsbalg nach einem der vorhergehenden Ansprüche, **dadurch gekennzeichnet, dass** der Dichtungsbalg (1) aus Kunststoff, Gummi oder TPE gefertigt ist.

11. Dichtungsbalg nach einem der vorhergehenden Ansprüche, **dadurch gekennzeichnet, dass** der zweite Dichtungsbalgrand (1c) an seiner dem Bauteil (4) abgewandten Seite eine umlaufende Nut (1c") für die Aufnahme eines Spannringes (5) hat.

12. Dichtungsbalg nach einem der vorhergehenden Ansprüche, **dadurch gekennzeichnet, dass** der zweite Dichtungsbalgrand (1c) Dichtungslippen (1c') aufweist.

13. Dichtungsbalg nach einem der vorhergehenden Ansprüche, **dadurch gekennzeichnet, dass** ein optionaler Spannring (7) den Dichtungsbalgrand (1a) radial nach innen kraftbeaufschlagt.

14. Kugelgelenk für Kraftfahrzeuge mit einem Gehäuse (2), einem in dem Gehäuse (2) schwenkbar und/oder drehbar gelagerten Kugelzapfen (4) sowie einem Dichtungsbalg (1) nach einem der vorherigen Ansprüche, **dadurch gekennzeichnet, dass** der erste Dichtungsbalgrand (1a) eine Verzahnung (3a) aufweist, die mit einer korrespondierenden Oberflächeokontur (2a) des Gehäuses (2) zusammenwirkt.

15. Kugelgelenk nach Anspruch 14, **dadurch gekennzeichnet, dass** der zweite Dichtungsbalgrand (1c) mittels eines Spannrings (5) festsitzend an dem Kugelzapfen (4) anliegt und über den Mantelbereich (1b) mit dem ersten Dichtungsbalgrand (1a) verbunden ist.

16. Kugelgelenk nach Anspruch 14 oder 15, **dadurch gekennzeichnet, dass** die Oberflächenkontur (2a) ebenfalls eine Verzahnung ist, wobei die beiden Verzahnungen (3a, 2a) sägezahnförmig gestaltet sind, wobei die schrägen Flanken der Verzahnung (3 a) des Dichtungsbalges (1) in Richtung der Montagerichtung und die schrägen Flanken der Verzahnung (2a) des Gehäuses entgegen der Montagerichtung des Dichtungsbalges weisen.

17. Kugelgelenk nach einem der Ansprüche 14 bis 16, **dadurch gekennzeichnet, dass** die Verzahnung (2a) des Gehäuses (2) radial nach außen an einem in den Dichtungsbalg hinragenden Vorsprung (2b) angeordnet ist, wobei die an den Vorsprung (2b) angrenzende Gehäusewandung (2c) die Aufziehbewegung des Dichtungsbalges (1) auf das Gehäuse (2) begrenzt.

18. Kugelgelenk nach einem der Ansprüche 14 bis 16, **dadurch gekennzeichnet, dass** das Gehäuse (2) einen in den Dichtungsbalg hinragenden Vorsprung (2b) hat, der einen zusätzlichen Dichtungsring (8) trägt, der eine radial nach außen zeigende umlaufende Verzahnung (8a) hat, die mit der Verzahnung (3a) des Dichtungsbalgs (1) zusammenwirkt.

19. Kugelgelenk nach Anspruch 18, **dadurch gekennzeichnet, dass** der zusätzliche Dichtungsring (8) aus Kunststoff oder TPE gefertigt ist.

20. Kugelgelenk nach einem der Ansprüche 14 bis 19, **dadurch gekennzeichnet, dass** Fett zwischen der Verzahnung (3a) und der korrespondierenden Oberflächenkontur (2a) des Gehäuses (2) zur Erzielung einer leichteren Montage und besseren Dichtwirkung ist.

21. Kugelgelenk nach einem der Ansprüche 14 bis 20, **dadurch gekennzeichnet, dass** die Verzahnung (2a) des Gehäuses (2a) bzw. die Verzahnung (8a) des zusätzlichen Dichtungsrings (8) mit einem Abdichtungs- und/oder Gleitmaterial beschichtet bzw. dieses angespritzt oder aufvulkanisiert ist.

## Claims

1. Sealing bellows comprising a casing (1b) which is disposed between a first and a second sealing bellows edge (1a, 1c), wherein the sealing bellows edges (1a, 1c) lie in a sealing manner against components when the sealing bellows (1) are in the assembled state, and wherein at least one first sealing bellows edge (1a) comprises an all-round tooth system (3a) which points radially inwards,
**characterised in**
**that** a sealing ring (3) forms the tooth system (3a), wherein the sealing ring (3) is moulded, glued or stuck onto a sealing bellows edge (1a) or directly onto the casing.

2. Sealing bellows according to Claim 1, **characterised in that** the teeth of the tooth system (3a) of the sealing bellows (1) lie in a sealing manner in a corresponding outer contour (2a) of a component (2) in the assembled state.

3. Sealing bellows according to Claim 1 or 2, **characterised in that** the tooth system (3a) is sawtooth-shaped, wherein the oblique flanks point in the direction in which the sealing bellows (1) are drawn onto the component (2).

4. Sealing bellows according to Claim 1, **characterised in that** the sealing ring (3) comprises a ring (9), in particular of plastics material or metal, which lies in particular in the sealing ring.

5. Sealing bellows according to Claim 1, **characterised in that** the sealing ring (3) consists of rubber and the ring (9), which is made of metal or plastics material, is vulcanized in, or that the sealing ring (3) consists of plastics material, wherein the ring (9) made of metal or plastics material is then injected.

6. Sealing bellows according to any one of the preceding Claims, **characterised in that** the sealing bellows edge (1a), which comprises the tooth system (3a), or the sealing ring (3) has a circular cross section, wherein the inside diameter of the sealing bellows edge (1a) or of the sealing ring (3) is dimensioned such that the preload of the sealing bellows material or of the sealing ring material pushes the teeth of the tooth system (3a) into the corresponding outer contour (2a) of the component (2) in a sealing manner in the pushed-on, assembled state.

7. Sealing bellows according to any one of the preceding Claims, **characterised in that** both sealing bellows edges comprise a tooth system which co-operates with corresponding surface contours of the components cooperating with the sealing bellows.

8. Sealing bellows according to any one of the preceding Claims, **characterised in that**, together with the corresponding outer contour (2a) of the component (2), the tooth system (3a) forms a sealing snap connection.

9. Sealing bellows according to any one of the preceding Claims, **characterised in that** the tooth system (3a) is made of plastics material, rubber or TPE.

10. Sealing bellows according to any one of the preceding Claims, **characterised in that** the sealing bellows (1) are made of plastics material, rubber or TPE.

11. Sealing bellows according to any one of the preceding Claims, **characterised in that** the second sealing bellows edge (1c) has an all-round groove (1c") for holding a clamping ring (5) on its side which is remote from the component (4).

12. Sealing bellows according to any one of the preceding Claims, **characterised in that** the second sealing bellows edge (1c) comprises sealing lips (1c').

13. Sealing bellows according to any one of the preceding Claims, **characterised in that** an optional clamping ring (7) subjects the sealing bellows edge (1a) to force in the radially inward direction.

14. Ball-and-socket joint for motor vehicles with a housing (2), a ball pin (4), which is pivotably and/or rotatably mounted in the housing (2), as well as sealing bellows (1) according to any one of the preceding Claims, **characterised in that** the first sealing bellows edge (1a) comprises a tooth system (3a) which co-operates with a corresponding surface contour (2a) of the housing (2).

15. Ball-and-socket joint according to Claim 14, **characterised in that** the second sealing bellows edge (1c) lies snugly by means of a clamping ring (5) against the ball pin (4) and is connected via the casing region (1b) to the first sealing bellows edge (1a).

16. Ball-and-socket joint according to Claim 14 or 15, **characterised in that** the surface contour (2a) is likewise a tooth system, wherein the two tooth systems (3a, 2a) are of sawtooth configuration, wherein the oblique flanks of the tooth system (3a) of the sealing bellows (1) point in the direction of the assembly direction and the oblique flanks of the tooth system (2a) of the housing point against the assembly direction of the sealing bellows.

17. Ball-and-socket joint according to any one of Claims 14 to 16, **characterised in that** the tooth system (2a) of the housing (2) is disposed in the radially outward direction on a projection (2b) which projects into the sealing bellows, wherein the housing wall (2c) adjoining the projection (2b) limits the movement by which the sealing bellows (1) are drawn onto the housing (2).

18. Ball-and-socket joint according to any one of Claims 14 to 16, **characterised in that** the housing (2) has a projection (2b) which projects into the sealing bellows and which bears an additional sealing ring (8) which has an all-round tooth system (8a) which points radially outwards and which co-operates with the tooth system (3a) of the sealing bellows (1).

19. Ball-and-socket joint according to Claim 18, **characterised in that** the additional sealing ring (8) is made of plastics material or TPE.

20. Ball-and-socket joint according to any one of Claims 14 to 19, **characterised in that** grease between the tooth system (3a) and the corresponding surface contour (2a) of the housing (2) is to make assembly easier and improve the sealing effect.

21. Ball-and-socket joint according to any one of Claims 14 to 20, **characterised in that** the tooth system (2a) of the housing (2a) or the tooth system (8a) of the additional sealing ring (8) is coated with a sealing and/or sliding material or the latter is moulded or vulcanized on.

## Revendications

1. Soufflet d'étanchéité, comprenant une enveloppe (1b) disposée entre des premier et second cols (1a, 1c) du soufflet d'étanchéité, les cols (1a, 1c) du soufflet d'étanchéité étant, à l'état monté du soufflet d'étanchéité (1), en contact avec des composants, et au moins un premier col (1a) du soufflet d'étanchéité présentant une denture périphérique (3a) dirigée radialement vers l'intérieur,
**caractérisé en ce que** la denture (3a) est formée par une bague d'étanchéité (3), la bague d'étanchéité (3) étant moulée, attachée ou collée à un col (1a) du soufflet d'étanchéité, ou directement à l'enveloppe de celui-ci.

2. Soufflet d'étanchéité selon la revendication 1, **caractérisé en ce qu'**à l'état monté, les dents de la denture (3a) du soufflet d'étanchéité (1) s'emboîtent de façon étanche dans un contour extérieur correspondant (2a) d'un composant (2).

3. Soufflet d'étanchéité selon la revendication 1 ou 2, **caractérisé en ce que** la denture (3a) est réalisée en forme de dents de scie, les flancs obliques étant orientés dans le sens d'un mouvement d'emmanchement du soufflet d'étanchéité (1) sur le composant (2).

4. Soufflet d'étanchéité selon la revendication 1, **caractérisé en ce que** la bague d'étanchéité (3) comporte un anneau (9) notamment fait en matière plastique ou en métal, qui est notamment encastré dans la bague d'étanchéité.

5. Soufflet d'étanchéité selon la revendication 1, **caractérisé en ce que** la bague d'étanchéité (3) est faite en caoutchouc, et que l'anneau (9) fait en métal ou en matière plastique est vulcanisé dans celle-ci, ou que la bague d'étanchéité (3) est faite en matière plastique, l'anneau (9) fait en métal ou en matière plastique étant alors noyé dans celle-ci par moulage par injection.

6. Soufflet d'étanchéité selon l'une des revendications précédentes, **caractérisé en ce que** le col (1a) du soufflet d'étanchéité, qui comporte la denture (3a), voire la bague d'étanchéité (3), présente(nt) une section transversale circulaire, le diamètre intérieur du col (1a) du soufflet d'étanchéité, ou celui de la bague d'étanchéité (3), étant calculé de manière telle qu'à l'état emmanché monté, la précontrainte de la matière du soufflet d'étanchéité ou de la matière de la bague d'étanchéité fasse pénétrer les dents de la denture (3a) de façon étanche dans le contour extérieur correspondant (2a) du composant (2).

7. Soufflet d'étanchéité selon l'une des revendications précédentes, **caractérisé en ce que** les deux cols du soufflet d'étanchéité présentent chacun une denture qui coopère avec des contours de surface correspondants des composants qui coopèrent avec le soufflet d'étanchéité.

8. Soufflet d'étanchéité selon l'une des revendications précédentes, **caractérisé en ce que** la denture (3a) forme, en conjonction avec le contour extérieur correspondant (2a) du composant (2), un assemblage étanche à enclenchement.

9. Soufflet d'étanchéité selon l'une des revendications précédentes, **caractérisé en ce que** la denture (3a) est réalisée en matière plastique, en caoutchouc ou en TPE.

10. Soufflet d'étanchéité selon l'une des revendications précédentes, **caractérisé en ce que** le soufflet d'étanchéité (1) est réalisé en matière plastique, en caoutchouc ou en TPE.

11. Soufflet d'étanchéité selon l'une des revendications précédentes, **caractérisé en ce que** le deuxième col (1c) du soufflet d'étanchéité comporte, du côté éloigné du composant (4), une gorge périphérique (1c") destinée à recevoir un anneau de serrage (5).

12. Soufflet d'étanchéité selon l'une des revendications précédentes, **caractérisé en ce que** le deuxième col (1c) du soufflet d'étanchéité présente des lèvres d'étanchéité (1c').

13. Soufflet d'étanchéité selon l'une des revendications précédentes, **caractérisé en ce qu'**un anneau de serrage (7) monté en option applique au col (1a) du soufflet d'étanchéité une force dirigée radialement vers l'intérieur.

14. Articulation à rotule pour véhicules automobiles, comprenant un boîtier (2), un pivot à rotule (4) logé de façon pivotante et/ou rotative dans le boîtier (2), ainsi qu'un soufflet d'étanchéité (1) selon l'une des revendications précédentes,
**caractérisée en ce que** le premier col (1a) du soufflet d'étanchéité présente une denture (3a) qui coopère avec un contour de surface correspondant (2a) du boîtier (2).

15. Articulation à rotule selon la revendication 14, **caractérisée en ce que** le deuxième col (1c) du soufflet d'étanchéité est maintenu de façon fixe en contact avec le pivot à rotule (4), au moyen d'un anneau de serrage (5), et est relié au premier col (1a) du soufflet d'étanchéité par l'intermédiaire de la partie d'enveloppe (1b).

16. Articulation à rotule selon la revendication 14 ou 15, **caractérisée en ce que** le contour de surface (2a) est également une denture, les deux dentures (3a, 2a) étant configurées en forme de dents de scie, les flancs obliques de la denture (3a) du soufflet d'étanchéité (1) étant orientés dans le sens du montage, et les flancs obliques de la denture (2a) du boîtier étant orientés dans le sens inverse du montage du soufflet d'étanchéité.

17. Articulation à rotule selon l'une des revendications 14 à 16, **caractérisée en ce que** la denture (2a) du boîtier (2) est aménagée radialement à l'extérieur, sur une saillie (2b) saillant à l'intérieur du soufflet d'étanchéité, la paroi (2c) du boîtier, qui est adjacente à la saillie (2b), limitant le mouvement d'emmanchement du soufflet d'étanchéité (1) sur le boîtier (2).

18. Articulation à rotule selon l'une des revendications 14 à 16, **caractérisée en ce que** le boîtier (2) comporte une saillie (2b) saillant à l'intérieur du soufflet d'étanchéité, qui porte une bague d'étanchéité supplémentaire (8) présentant une denture périphérique (8a) dirigée radialement vers l'extérieur, qui coopère avec la denture (3a) du soufflet d'étanchéité (1).

19. Articulation à rotule selon la revendication 18, **caractérisée en ce que** la bague d'étanchéité supplémentaire (8) est réalisée en matière plastique ou TPE.

20. Articulation à rotule selon l'une des revendications 14 à 19, **caractérisée en ce que** de la graisse est disposée entre la denture (3a) et le contour de surface correspondant (2a) du boîtier (2) en vue de faciliter le montage et d'obtenir un meilleur effet d'étanchéité.

21. Articulation à rotule selon l'une des revendications 14 à 20, **caractérisée en ce que** la denture (2a) du boîtier (2) ou la denture (8a) de la bague d'étanchéité supplémentaire (8) est/sont revêtues d'un produit d'étanchéité et/ou lubrifiant, ou que ce dernier est moulé ou vulcanisé sur la denture.
